## Europäisches Patentamt
(19) **European Patent Office**
**Office européen des brevets**

(11) Numéro de publication: **0 086 312**
**B1**

(12) **FASCICULE DE BREVET EUROPEEN**

(45) Date de publication du fascicule du brevet:
04.06.86

(51) Int. Cl.⁴: **B 65 G 53/46**

(21) Numéro de dépôt: **82400252.1**

(22) Date de dépôt: **12.02.82**

(54) Appareil de manutention pneumatique fonctionnant en continu sous de fortes pressions.

(43) Date de publication de la demande:
**24.08.83 Bulletin 83/34**

(45) Mention de la délivrance du brevet:
**04.06.86 Bulletin 86/23**

(84) Etats contractants désignés:
**AT BE CH DE GB IT LI LU NL SE**

(56) Documents cités:
**DE - B - 1 756 822**
**DE - B - 2 419 841**
**FR - A - 848 608**
**FR - A - 1 183 967**
**GB - A - 769 242**
**GB - A - 1 347 886**
**US - A - 4 180 188**

(73) Titulaire: **E.T.P.M., ENGINEERING TRANSPORT PNEUMATIQUE MECANIQUE, Société dite, Parc d'activités du Mandinet bâtiment EVOLIC, Lognes, F-77200 Torcy (FR)**

(72) Inventeur: **Fleurigeon, Jean-Louis, 10, rue du Parc des Sports, F-77170 Brie Comte Robert (FR)**

(74) Mandataire: **Armengaud, Alain, Cabinet ARMENGAUD AINE 3 Avenue Bugeaud, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un appareil de manutention pneumatique de produits fragmentaires, granuleux, pulvérulents, ou tous autres, pouvant fonctionner en continu sous des pressions élevées.

Les appareils connus (DE-B2 2 419 841) sont généralement constitués d'un corps, de deux flasques et d'un rotor alvéolaire ouvert, tournant à l'intérieur du corps. Le produit est chargé par la partie supérieure, le rotor l'amène dans la partie basse, l'air est injecté par un orifice situé en bas de l'appareil, et le mélange air + produit ressort en ligne par un autre orifice. On connaît également (FR-A 1 183 967) des appareils de manutention pneumatiques dans lesquels le rotor alvéolaire est ouvert d'un côté et fermé de l'autre par un bouclier, et dans lesquels l'orifice d'évacuation du mélange est décalé par rapport à l'orifice d'injection d'air. Dans ces appareils connus, comme dans toute machine, il y a des jeux, dûs aux tolérances d'usinage. Ces jeux provoquent des fuites à la mise sous pression. De plus, le fluide qui s'échappe par ces jeux n'est pas de l'air pur, mais un mélange d'air et de fines particules du matériau destiné à être manutentionné. Il s'ensuit une perte de rendement et une usure de l'appareil, en particulier du flasque situé du côté évacuation mélange air + produit, ainsi que du flan du rotor situé du même côté. Il est donc nécessaire de limiter la pression de fonctionnement de ces machines, pour éviter une détérioration trop rapide et une chute de rendement, due aux fuites qui s'amplifient avec l'usure.

Or, il est bien connu que le rendement d'un transport pneumatique augmente avec la pression de service.

La présente invention apporte des solutions à ces inconvénients, en permettant le réglage des jeux au strict minimum nécessaire au fonctionnement, en supprimant l'usure du flasque et du flan du rotor côté sortie, ce qui permet de monter en pression, tout en réduisant très fortement les fuites internes.

L'invention concerne un appareil de manutention pneumatique qui comprend: un orifice d'introduction du produit à manutentionner, des parties tournantes supportées par des flasques d'un corps et comportant un rotor ouvert d'un côté et fermé de l'autre par un bouclier, un orifice d'injection d'air, disposé parallèlement à l'axe des parties tournantes et débouchant du côté ouvert du rotor, et un orifice d'évacuation du mélange air + produit, décalé par rapport à l'orifice d'injection d'air (voir FR-A 1 183 967), caractérisé en ce qu'on délimite un jeu axial entre le côté ouvert du rotor et le flasque adjacent, et un jeu radial entre le corps et le bouclier, et en ce qu'on prévoit des orifices d'amenée d'air comprimé dans les flasques, de telle sorte que lesdits jeux forment des joints pneumatiques.

D'autres caractéristiques et avantages de cette invention ressortiront de la description faite ci-après en référence aux dessins annexés, qui en illustrent un mode de réalisation à titre d'exemple non limitatif. Sur les dessins:

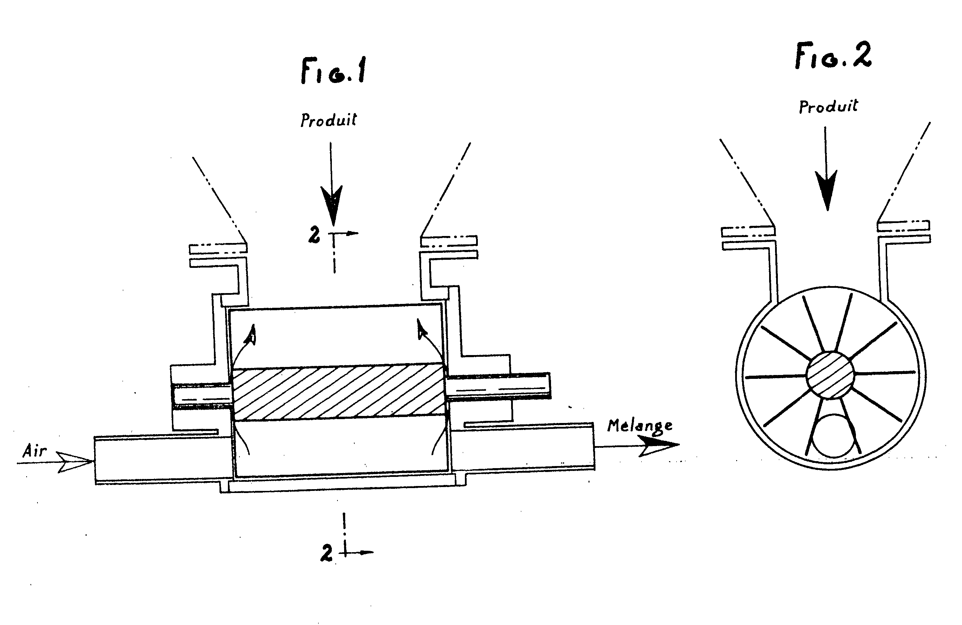

la Figure 1 est une vue en élévation, en coupe verticale, d'un appareil connu;
la Figure 2 est une vue selon 2-2 de la Figure 1;
la Figure 3 est une vue en élévation, en coupe verticale, d'un appareil suivant l'invention;
la Figure 4 est une vue en coupe 4-4 de la Figure 3, bouclier non représenté;
la Figure 5 est une vue similaire à la Figure 3, illustrant une variante de l'invention;
la Figure 6 est une coupe selon 6-6 de la Figure 5;
la Figure 7 est une vue en élévation, en coupe verticale, d'un appareil suivant l'invention, avec indication des sens de réglage des jeux; et
la Figure 8 est une vue en coupe selon 8-8 de la figure 7, le bouclier étant représenté.

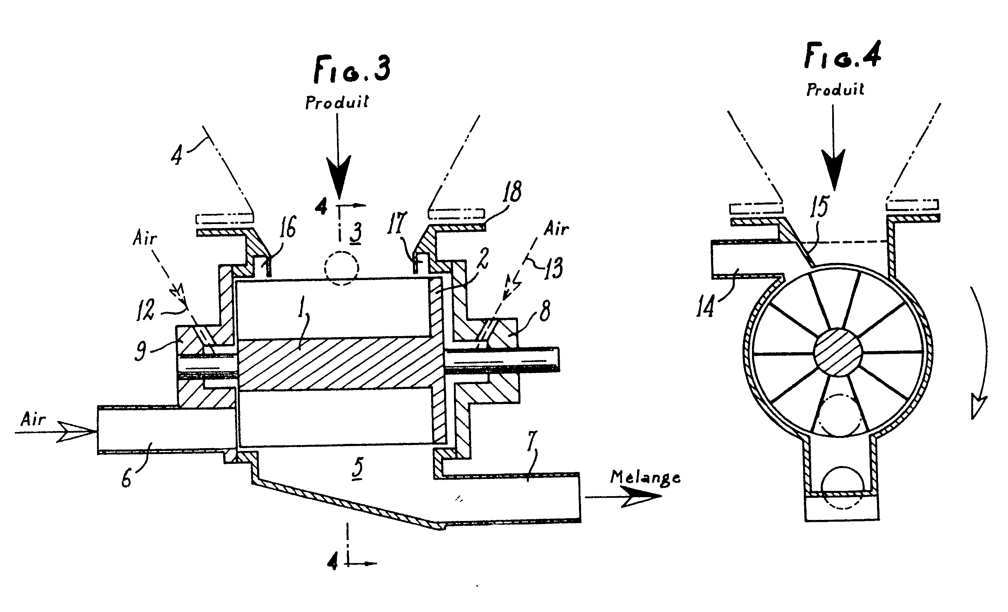

En se référant au dessin des figures 3 et 4, on voit que l'appareil suivant l'invention comprend un rotor 1 équipé d'un bouclier 2 qui se trouve situé entre deux flasques 8 et 9, dans un corps 18. Un orifice 3 sert à l'introduction du matériau à manutentionner, un orifice 6 permet l'injection d'air comprimé dans les alvéoles du rotor et un autre orifice 7, l'évacuation du mélange air + produit.

L'ensemble solidaire rotor-bouclier 1-2 est entraîné en rotation par une motorisation quelconque. Le produit est introduit dans l'appareil par l'orifice 3, soit par gravité, soit par un appareil quelconque, 4. Le rotor amène le matériau dans la partie basse 5, où les alvéoles sont balayées par le jet d'air comprimé injecté en 6. Il s'ensuit une turbulence provoquant le mélange de l'air et du produit, mélange qui se détend en 5 et s'écoule par l'orifice 7 destiné à être relié à une canalisation non représentée.

L'effet de choc de la turbulence est absorbé par le bouclier 2, qui peut s'user en épaisseur, sans que l'étanchéité diamétrale qu'il assure ne soit affectée. Le mélange air + produit s'évacue par 5 et 7. Le flasque de sortie 8 n'est donc pas soumis à l'abrasion.

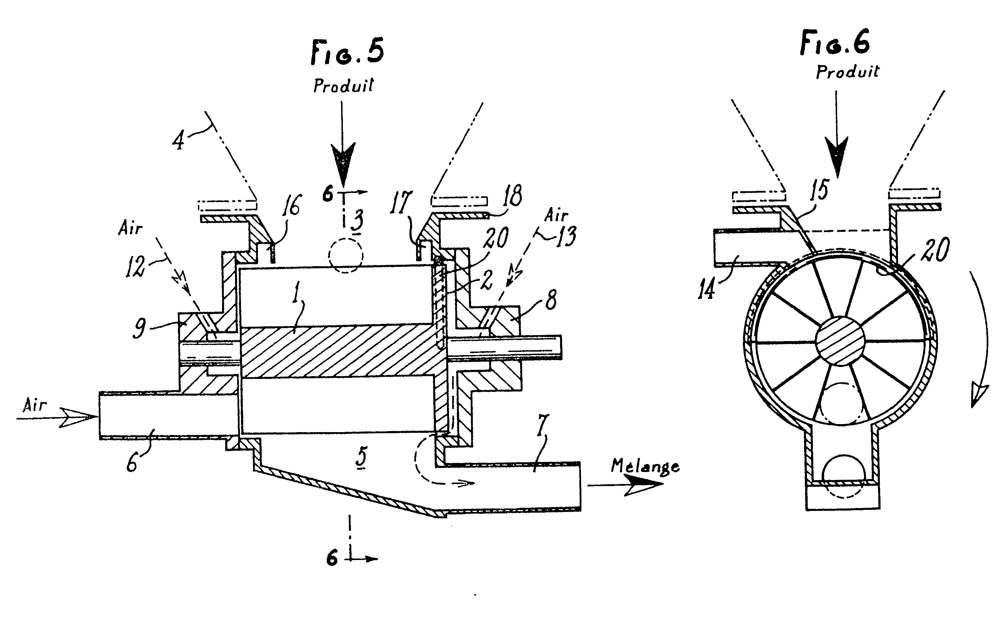

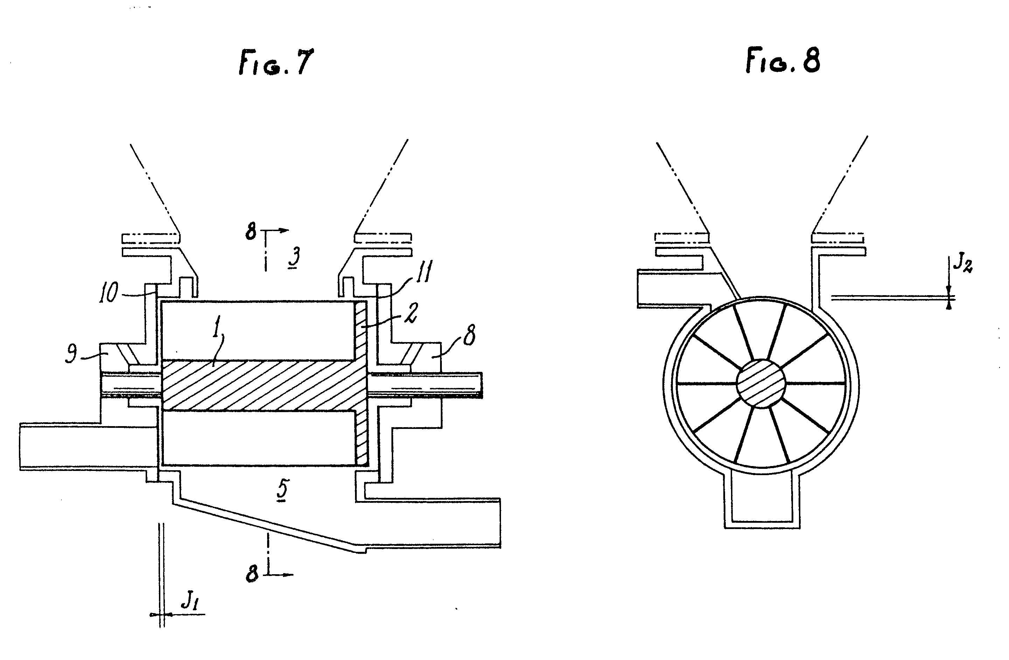

Dans la variante représentée sur les figures 5 et 6 l'étanchéité est assurée de façon différente. En effet, dans cette variante un joint, de préférence torique 20 est prévu pour assurer l'étanchéité dans la partie supérieure qui supporte la plus forte pression différentielle. L'étanchéité à la partie inférieure est assurée par le joint pneumatique comme dans l'exemple de réalisation décrit ci-dessus. On peut bien entendu envisager d'autres systèmes de joints. Cette solution présente notamment les avantages suivants:

– élimination de toute possibilité de fuite dans la partie supérieure de l'appareil;
– présence d'une légère fuite du joint pneumatique dans la partie inférieure, qui assure un nettoyage du bouclier, l'air de fuite étant recyclé dans le transport pneumatique.

Le réglage des jeux, donc de l'étanchéité, entre la zone 5 qui est sous pression et la zone 3 qui ne l'est pas, s'effectue de la façon suivante (figures 7 et 8):

– dans le plan axial $J_1$ (figure 7):
– en déplaçant le rotor-bouclier 1-2 vers le flasque 9;
– dans le plan radial $J_2$ (figure 8):
– en déplaçant l'ensemble rotor-bouclier 1-2, flasques 8-9, vers la zone 3, suivant les plans de glissement 10-11.

En agissant sur ces 2 réglages, il est possible de régler le rotor-bouclier 1-2 à quelques centièmes de millimètres des parties fixes. Il suffit que les pièces ne se touchent pas. L'étanchéité est donc excellente et il est possible d'accepter de fortes pressions dans la zone 5.

Afin d'éviter que des particules microscopiques ne s'introduisent dans les jeux de fonctionnement, de l'air comprimé, dont la pression est légèrement supérieure à celle règnant en 5, est injecté:

– dans le flasque 9 par l'orifice 12, ce qui crée un joint pneumatique entre le rotor 1 et le flasque 9. Comme expliqué ci-avant, le jeu étant très faible, la fuite est presque nulle;

– dans le flasque 8, par l'orifice 13, ce qui crée un joint pneumatique annulaire entre le bouclier 2 et le corps 18. Comme décrit précédemment, le jeu entre le bouclier 2 et le corps 18, vers la zone 3, étant très faible, la fuite est presque nulle. Par contre, du fait du réglage radial décrit ci-avant, le jeu entre le bouclier 2 et la zone 5 peut être un peu plus important, mais les fuites demeurent très faibles. En effet, si par exemple, la pression règnant en 5 est de 3 bars effectifs, il sera nécessaire d'injecter en 12 et 13 un air comprimé ayant une pression légèrement supérieure, par exemple 3,2 bars. La différence de pression entre 13 et 3 sera donc de 3,2 bars, ce qui nécessite un jeu presque nul, d'où le réglage radial vers 3. Par contre, la différence de pression entre 13 et 5 sera de 0,2 bars, ce qui explique que la fuite sera très faible malgré un jeu légèrement plus grand. De plus, cet air de fuite, réintroduit en 5 puis en 7, est récupéré comme faible apport pour le transport pneumatique du produit.

Lorsque les alvéoles remontent vers 3, elles sont sous pression. Un orifice 14, protégé par un déflecteur 15, permet leur décompression. Des collecteurs latéraux 16 et 17, permettent l'évacuation de l'air résiduel, joints pneumatiques et pression atmosphérique, vers 14 lors du chargement du produit en 3 dans les alvéoles du rotor 1.

L'invention peut être utlsée dans tous les cas de manutention pneumatique, c'est-à-dire lorsqu'il est nécessaire de transporter un produit d'un point à un autre à l'aide d'air comprimé dans une tuyauterie étanche. Il est également possible de fonctionner en dépression.

## Revendications

1. Appareil de manutention pneumatique qui comprend: un orifice d'introduction (3) du produit à manutentionner, des parties tournantes supportées par des flasques (8, 9) d'un corps (18) et comportant un rotor (1) ouvert d'un côté et fermé de l'autre par un bouclier (2), un orifice d'injection d'air (6), disposé parallèlement à l'axe des parties tournantes et débouchant du côté ouvert du rotor (1), et un orifice d'évacuation (7) du mélange air + produit, décalé par rapport à l'orifice d'injection d'air (6), caractérisé en ce qu'on délimite un jeu axial ($J_1$) entre le côté ouvert du rotor (1) et le flasque adjacent (9) et un jeu radial ($J_2$) entre le corps (18) et le bouclier (2), et en ce qu'on prévoit des orifices d'amenée (12, 13) d'air comprimé dans les flasques (8, 9) de telle sorte que lesdits jeux ($J_1$–$J_2$) forment des joints pneumatiques.

2. Appareil selon la revendication 1, caractérisé en ce que le réglage du jeu axial ($J_1$) s'effectue par déplacement de l'ensemble rotor (1) – bouclier (2) vers le flasque (9), et le réglage du jeu radial ($J_2$) s'effectue en déplaçant l'ensemble rotor (1) – bouclier (2) – flasques (8, 9) vers l'orifice d'introduction (3) suivant des plans de glissement (10-11).

3. Appareil selon la revendication 1 ou 2, caractérisé en ce que l'étanchéité de l'appareil est assurée, dans sa partie supérieure, par un joint torique (20).

## Claims

1. Apparatus for pneumatical transport comprising an inlet opening (3) for the product to be transported, rotating parts supported by flanges (8, 9) of a body (18) and comprising a rotor (1) opened on one side and closed on the other side by a shield (2), an air injection opening (6) located in a parallels direction to the axis of the rotating parts and emerging on the opened side of the rotor (1), and an outlet opening (7) for the mixture of air and product which is offset relatively to the air injection opening (6), characterized in that an axial clearance (J1) is provided between the opened side of the rotor and the adjacent flange (9) and a radial clearance (J2) is provided between the body (18) and the shield (2), and in that inlet openings (12, 13) for compressed air are provided in the flanges (8, 9) so that said clearances (J1, J2) form pneumatical joints.

2. Apparatus according to claim 1, characterized in that the control of the axial clearance (J1) is obtained by displacing the rotor (1) and shield (2) assembly towards the flange (9), and in that the control of the radial clearance (J2) is obtained by displacing the rotor (1), shield (2) and flanges (8, 9) assembly towards the inlet opening (3) along sliding planes (10–11).

3. Apparatus according to one of claims 1 or 2, characterized in that the tightness of the apparatus, at its open part, is secured by an O-ring (20).

## Patentansprüche

1. Unter hohen Druckwerten kontinuierlich arbeitendes Gerät zum pneumatischen Fördern mit einer Einlassöffnung (3) für das zu befördernde Produkt, mit sich drehenden Teilen, die sich auf die Wangen (8, 9) eines Körpers (18) abstützen, und mit einem auf der einen Seite offenen und auf der anderen Seite durch ein Schild (2) geschlossenen Rotor (1), mit einer Einspritzöffnung (6) für die Luft, welche Öffnung parallel zur Achse der sich drehenden Teile angeordnet ist und auf der offenen Seite des Rotors (7) mündet, und mit einer Auslassöffnung (7) für die aus Luft und Produkt bestehende Mischung, die in bezug auf die Einspritzöffnung (6) versetzt angeordnet ist, dadurch gekennzeichnet, dass ein axiales Spiel (J1) zwischen der offenen Seite des Rotors (1) und der benachbarten Wange (9) und ein radiales Spiel (J2) zwischen dem Körper (18) und dem Schild (2) belassen werden und dass Einlassöffnungen (12, 13) für Druckluft in den Wangen (8, 9) ausgespart sind, so dass diese Spielräume (J1, J2) pneumatische Dichtungen darstellen.

2. Gerät nach Anspruch 1, dadurch gekennzeichnet, dass die Einstellung des axialen Spiels (J1) durch Verstellung der aus Rotor (1) und Schild (2) bestehenden Einheit in Richtung zur Wange (9) und die Verstellung des radialen Spiels (J2) durch Verstellung der aus Rotor (1), Schild (2) und Wangen (8, 9) bestehenden Einheit in Richtung zur Einlassöffnung (3) längs Gleitebenen (11–11) erfolgt.

3. Gerät nach einem der Ansprüche 1 oder 2, dadurch gekennzeichnet, dass die Dichtigkeit des Gerätes in seinem oberen Teil durch einen O-Ring (20) gesichert ist.

## Fig.1

Produit

Air

Melange

## Fig.2

Produit

0 086 312

Fig.4

Produit

15

14

Fig.3

Produit

4

16

Air

12

9

6

Air

18

11

2

Air

13

17

8

7

1

5

Melange

**Fig.6**

Produit

14 15 20

**Fig.5**

Produit

Air 12

Air

Mélange

16 4 13 6 1 5 9 8 2 20 18 17 7 3

0 086 312

# Fig. 7

# Fig. 8